# EUROPEAN PATENT APPLICATION

(11) **EP 0 890 930 A2**
(43) Date of publication of application: **13.01.1999**
(21) Application number: 98110844.2
(22) Date of filing: 15.01.1990
(51) Int. Cl.: G07F 7/10

(54) **Imformartion carrier, transaction system and method using same**

(62) Divisional of application: 90903448.0
(71) Applicant: Utvecklings AB Jonic, 114 86 Stockholm (SE)
(72) Inventor: Sjöblom, Hans, 13336 Saltsjöbaden (SE)
(74) Representative: Henningsson, Gunnar

(57) **Abstract**

An information carrier and a transaction system and a transaction method using same. The information carrier is given an activation state to render the information carrier serviceable. When making a transaction, reading the activation state per se eliminates the activation state.

## Description

### Technical field

The present invention generally relates to systems for cooperation with credit cards and the like. In the present context the term credit card is intended to cover all forms of information carriers which are portable and which can receive and give off information.

More precisely, the invention relates to a transaction system comprising an information carrier, in particular an IC-card, and a transaction device, the information carrier including information storing means, means being arranged for activating the information carrier by imparting to said information storing means an activation state, the transaction device being arranged for cooperation with the information carrier for reading said activation state of said information storing means of the information carrier thereby to validate a transaction to be performed, said cooperation between the information carrier and the transaction device under predetermined conditions causing the activation state to be eliminated.

The invention also relates to a method of validating a transaction to be performed, controlled by an information carrier, in particular an IC-card, read by a transaction device, the information carrier first being brought into an activation state by the holder of the information carrier and thereafter being read by the transaction to validate the transaction to be performed, the activation state of the information carrier being eliminated in response to predetermined transaction conditions.

Furthermore, the invention relates to an information carrier, in particular an IC-card, to be used when performing a transaction, the information carrier comprising information storing means including a chip circuit having signal processing means and memory means, for storing an activation state, means being provided for eliminating said activation state in connection with a transaction.

### Prior art

Nowadays various forms of identity and credit cards are generally used, most of them including, besides visually readable information such as the card owner's name etc.., some form of information carrier, readable by electronic means. Said type of information carrier usually comprise a tape of magnetic material into which a signal code is introduced, said code being readable for identification purposes by electromagnetic means and electronic apparatus connected thereto. An example hereof is so called "Bankomat" (an automatic cash dispenser) cards and card reading machines associated therewith.

There are also credit cards and identification documents today which include electronic circuits, so called chips, which in turn include memory and signal processing circuits. These chips are provided with means for receiving and emitting signals from and to outside transmission means. Consequently, by means of this technique information can be stored in the memory of the chip circuits, to be utilized in various ways. Among the public such credit cards are now called "smart cards". The advantage of e.g. credit cards provided with such chips is the feature that when using the card, for instance, as a "Bankomat" card or account card in departement stores, direct information of the owner's credit worthiness can be obtained, provided that the point of sale concerned is connected to a banking centre, e.g. via modems and telecommunication networks. For example, between said chips and the banking centre such communication can be established that the purchase sum at any time of buying is automatically deducted from the credit amount available, and is restored in the memory of the chip circuit to be used again at the next point of purchase.

A credit card operating and used in this way will of course mean excellent security to shopkeepers as well as the bank, inasmuch as control functions can be established in a very reliable way. The level of security in the present connection is thus very high. However, a considerable disadvantage of a system as disclosed above is the fact that each point of sale has to be equipped with a terminal connected by modems to a banking centre, e.g. by way of telecommunication circuits or leased circuits. As a matter of course it will be very costly for a departement store to install a terminal at every cash desk. Also, the loading of the telecommunication network will also be considerable. However, such systems have been tested in practice and found to be secure but they are, as stated, expensive to install as well as to run. The credit cards proper, however, are comparatively cheap to produce, even if they are provided with a chip.

In today's situation a credit card can be used many times over if an unauthorized person gets hold of it. The time before one manages to freeze a card can vary from a few hours to a week, which of couse is very unfavourable to the card owner. The economical loads on card owners as well as on account card enterprises are considerable. Much would be gained if a level of security could be attained in everyday handling which approaches that exhibited by credit cards with chips according to the above. Essential is to prevent unauthorized persons from using another persons credit card.

DE, A1, 3632294 discloses a device for activation an IC-card, the card having an internal deactivation function for deactivating the card if the activated card has not been used to perform a transaction within a given time period.

EP 0 291 834 A1 discloses an IC-card which after having been activated is used for performing a transaction at a terminal device. When the transaction has been performed, the terminal device sends a reset signal to the card, thereby deactivating the card.

### Summary of the invention

The present invention is based upon the idea to render a credit card or similar information carrier unvalid for payment as long as the owner does not take special measures to bring the card into a state of validity. The owner has at his disposal a code transmission apparatus which can be communicated with a memory circuit included in the credit card or the like for transferring a specific validity code to the memory circuit to impart an activation state, rendering the card serviceable. A credit card brought into this state is intended to be put in cooperation with further transmission apparatus, e.g. mounted in a so called imprinter at a point of sale, for reading the memory contents of the chip circuit. The further transmission apparatus is adapted to extinguish the activation state of the memory circuit of the chip circuit on reading the validity code per se. The procedure thus described is arranged to trigger indicating means so that the point of sale or the like concerned will obtain an indication that the card is valid as a means of payment. When the card is given back to the owner there are thus no validity markings, which means that if some unauthorized person should get hold of the card this cannot be used. Any corresponding apparatus at any point of sale would give rise to an indication of unvalidity. As can be seen, the credit card in question will be completely unfit for use as long as the owner does not activate the card.

Thus, according to the invention the transaction system is characterized in that the transaction device, on reading the activation state per se, is arranged to cause the activation state of the information storing means to be eliminated.

Also, according to the invention, the method of validating a transaction to be performed is characterized by causing the activation state of the information carrier to be eliminated in response to the transaction device reading the activation state per se.

Furthermore, according to the invention, the information carrier is characterised in that said means for eliminating the activation state are arranged for such elimination in response to the reading of the activation state per se.

Further preferred features of the system and the method according to the invention are defined in the respective dependent claims.

### Brief description of the drawings

Fig. 1 shows a credit card having an internal chip circuit.

Fig. 2 shows diagrammatically the chip circuit according to Fig. 1 in communicative cooperation with a transmission device for signal transfer.

Fig. 3 shows the credit card according to Fig. 1 with its chip circuit in cooperation with an activating device.

Fig. 4 shows diagrammatically and in perspective a press copying machine for credit cards which is not an embodiment of present invention.

### Description of embodiment

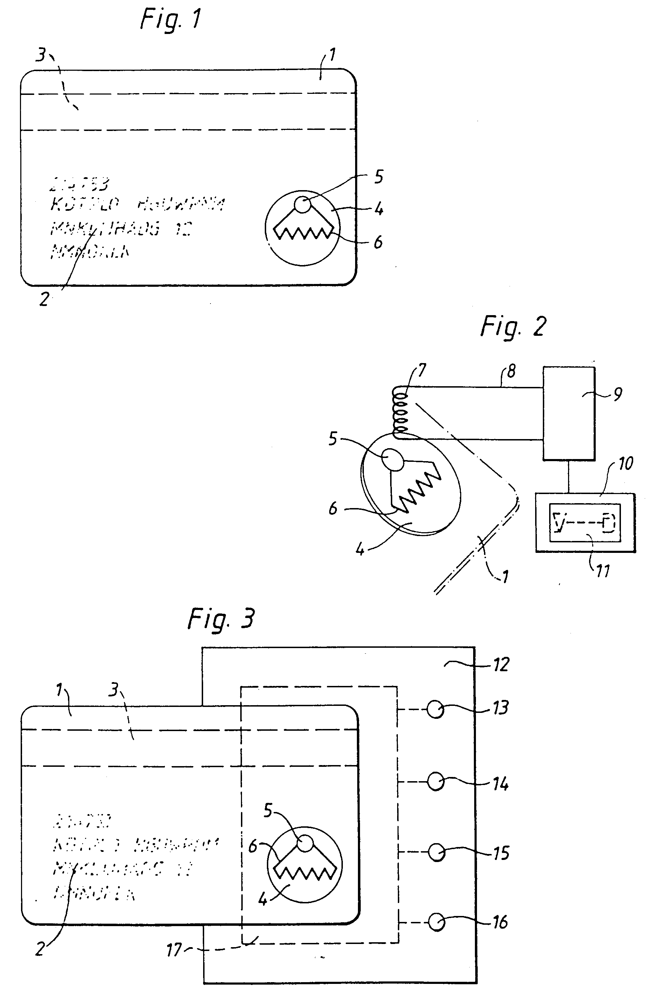

The credit card 1 shown in Fig. 1 is provided in the usual way with markings for identification, generally impressed and stating the owner's name and identification number. The reverse side of the credit card 1 contains a magnetic strip 3 intended to cooperate with reading means, for example, occuring in connection with "Bankomat" terminals. The credit card also includes a chip circuit 4 with a signal transferring means 5 and a memory circuit 6. The chip circuit also contains signal processing units, but for the sake of clarity such circuit members have been omitted. Consequently the chip circuit is illustrated completely diagrammatically.

As pointed out in the introduction a chip circuit can be supplied with a state of signal which can be stored in its memory. Fig. 2 shows a transmission device for the inductive transfer of states of signal to the chip circuit proper. In order that states of signal be possible to transfer a coil 7 is used for inductive cooperation with the signal transferring means 5. Said coil 7 is in communication, by cables 8, with a transceiver arrangement 9 communicates with an indication means 10 including a display screen 11. By activation the transceiver arrangement 9 activation signals can be transferred inductively by way of coil 7 to the receiving means 5 in order to make it possible that the chip circuit in turn be activated and states of signal possibly be stored in the memory circuit 6. The communication can be bidirected, that is, upon certain commands the chip circuit can respond and submit to the transceiver arrangement 9 states of signal which can be visualized on the display 11. Consequently, information can be stored in the memory circuit 6 which is significant to the use of the credit card in connection with e.g. a terminal.

As stated above a credit card or some other information carrier in its normal condition is inactive or exhibits some state of information indicating that the car concerned is unserviceable. This means that the card has to be activated, that is, be brought into such a state that it can be used as means of payment. To this end the card is presented to an activation device. Such an activating device is illustrated in Fig. 3 and designated 12. The activating device includes four operating keys 13, 14, 15, 16 each connected to a signal processing and transmitting circuit 17 included in the activating device. Although not shown in detail the circuit 17 includes similar devices as those shown in Fig. 2, that is 7, 8 and 9, for cooperation with the receiving means 5 in the chip circuit 4. Fig. 3 illustrates how the credit card is brought together with the activating device so that a state of signal can be transferred from the activating circuit to the memory 6 of the chip circuit 4. Introducing a code signal sequence forming a state of activation in the memory 6 could suitable be triggered by a specific sequential depressing of the operating keys 13-16. For example, to the card owner and user an operation sequence could be such that first the operating key 15 is depressed. Then 13, followed by 14 and 16. After such an operation a state of signal has thus been transferred to the memory circuit 6, and the card is now to be considered serviceable. The user can thus remove the card form the activating device 12 and leave their card to a point of sale as a means of payment.

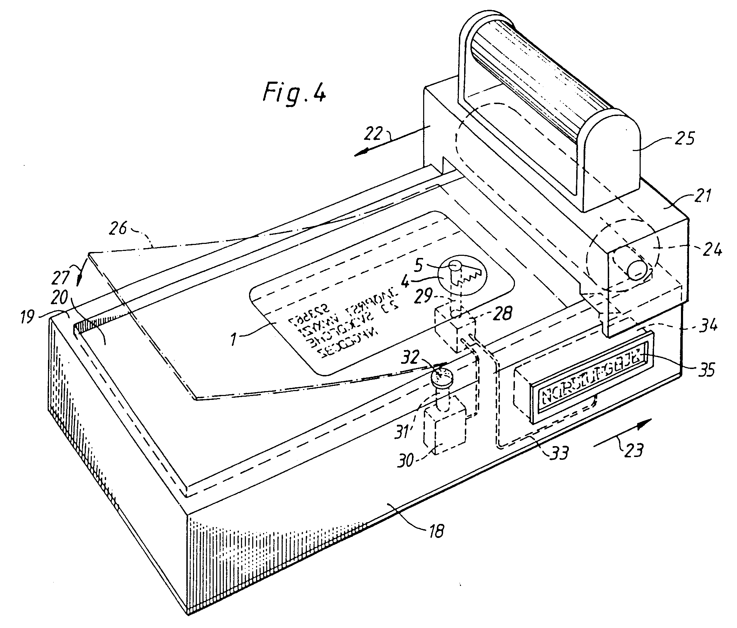

In fig. 4 there is diagrammatically shown a press copying machine, i.e. a device for transferring by pressure embossed information from a credit card to a bundle of debiting and checking blanks for the customer to confirm and attest. The press copying machine 18 shown in the figure has the form of a box having an upper frame 19 defining a lowered surface 20 with a recess for receiving the credit card 1 concerned. On the edges 19 of the frame a press copying mechanism 21 is arranged slidable and displaceable along the box in the directions of arrows 22 and 23. The press copying mechanism 21 includes in the usual manner a pressure roll 24 and an operating handle 25 at the top. By dot-dashed lines there is indicating said bundle of checking and debiting blanks 26 to be inserted in the direction of arrow 27 on top of the credit card and onto the lowered surface 20. In operating the mechanism 21, i.e. displacing it in the direction of arrow 22, the pressure roll 24 will press the blanks against the credit card and perform imprinting. The machine 18 illustated is provided in its box-shaped part with a transceiver device 28 and associated transmission details 29. The apparatus now described is located such that communication can be established between the chip circuit 4 and the transceiver device 28. A change-over switch 30 is connected to the transceiver device 28 by a cable 29, the switch having an operating rod 31 carrying an operating button 32 projecting somewhat above the surface of the frame 19. The device 28 communicates by a cable 33 with an indicating device 34 with an indicating display screen 35.

It is assumed, as described in connection with Fig. 3, that the activated credit card is inserted into the press copying machine 18 shown in Fig. 4 on the spot marked for the purpose, after which the bundle of debiting blanks 26 is inserted and the pressure mechanism 21 set in motion in the direction of arrow 22 by the handle 25 being operated. According as the mechanism slides along the two sides of the frame 19 the pressure roll 24 will press the bundle 26 against the credit card and impression occurs as usual. When the pressure mechanism 21 has arrived to the operating button 32 this will be actuated by a force causing the switch 30 to be reversed, which has the effect that the transceiver device 28 is started and emits an inquiry signal sequence which is transferred to the chip circuit 4 in the manner previously disclosed. Hereby the chip circuit arrives into operating position and opens the memory circuit towards the transceiver device 28. The state previously applied to the memory of the chip circuit is now communicated to the device 28 which will read said state. If the state exhibits a predetermined value, a signal is transmitted to the indicating unit 34. Then the display 35 is being lit and an indication shows, for example, by the letters "Valid", that the credit card in question is serviceable. When the pressure device 21 has been pushed all the the way to the opposite end of the machine 18 the operating push button 32 is again released and the transceiver circuit 28 returns to a resting position. In order to make it possible to remove the bundle 26 the pressure mechanism 21 has to be returned to the starting position shown in Fig. 4. In doing so the pressure will again actuate the operating button 32 with the result that the transceiver 28 is switched to transmitting position. A code signal is then emitted and transmitted to the chip circuit 4, said code signal causing the state earlier applied to the memory 6 to be extinguished. Hence, when the credit card is given back to the customer it is unfit for use but, still, it has served its purpose by having given the point of sale a go-ahead signal to the effect that it has been possible to use the card at the moment of sale. The credit card can now be kept by the owner without being under any particular supervision, as the card, should it be used improperly at any point of sale, would be unable to create any go-ahead signal on the indicating display 35.

As shown, a credit card, otherwise a booty attracting thieves, can be made worthless in very simple way, as the user normally maintains the credit card inactive, that is, unserviceable. A press copying machine equipped in a manner shown in Fig. 4 represents a modest investment indeed in comparison with the installation of a bank associated terminal with modems and the like at every point of sale. As pointed out earlier security will of course not be quite the same as when terminals are used, still, misuse of the credit card by unauthorised persons can be largely prevented.

In order to further raise the safety level such solutions can of course be conceived where the credit card magnet strip 3 mentioned earlier is read by means, not shown in detail, when the pressure mechanism 21 is displaced. Then the code information obtained by reading the contents of the magnet strip 3 together with code contents of the memory 6 of the chip circuit 4 can form parameters for a comparison of information, which in turn can result in triggering the indicating device 34 so that the display 35 will indicate a serviceable credit card. In such a connection the security level will of course be raised considerably.

The security level can be raised further by the following measures relating to the press copying machine proper. As mentioned before the contents of the memory of the chip circuit 4 is read in connection with the credit card being press copied. Besides the fact that a state is imparted to the memory indicating that the card is serviceable it is conceivable that information has been introduced into the memory about the recording of the credit card with the credit card company concerned. Such information can be readily stored in a memory in the means 28. As mentioned before, returning the press copying mechanism 21 is intended to bring about elimination of the state in the chip memory 6. Simultaneously with this operation a random number generator (not shown) component of the means 28 can be started, said generator being coded by the credit card company. Then joint operation of the credit card information and the random number code will advise that the card besides being servicable also is valid, a piece of information which is valuable to the point of sale and also constitutes to the credit card company a confirmation of transaction. As a matter of fact, if necessary the memory contents can be periodically read by the credit card company when the press copying machine is checked, e.g. at service.

Triggering the code for extinguishing the state introduced into the memory 6 of the chip circuit 4 can be brought about in another way than by actuating again the change-over switch 30 when the mechanism 21 is returned to its starting position. According to the invention reading the state per se forms the basis of triggering the extinguishing procedure. Thus, the card is unfit for use when removed from the machine 18.

Within the scope of the invention the state(s) imparted to the memory 6 to make the card serviceable can include further information possibly necessary to the points of sale. In such cases the indicating unit is to be adjusted to growing demands for information.

As a matter of course, the activating device 12 shown in Fig. 3 could be designed in many ways. Suitably it is made plane to fit a credit card and a place where to keep it, e.g. a wallet. It is conceivably that the introduction of states can be initiated by other means than by push button 13-16. Here modern technics offer many solutions. Suitably the chip circuit is designed such that a state transferred thereto and stored therein has a timely limited duration in order to prevent unauthorized use of an activated card during a period of time longer than that requested for concluding a normal registration procedure at a point of sale.

## Claims

1. A transaction system comprising an information carrier (1), in particular an IC-card, and a transaction device (28), the information carrier (1) including information storing means (4, 5, 6), means (12) being arranged for activating the information carrier by imparting to said information storing means an activation state, the transaction device (28) being arranged for cooperation with the information carrier (1) for reading said activation state of said information storing means (4, 5, 6) of the information carrier thereby to validate a transaction to be performed, said cooperation between the information carrier (1) and the transaction device (28) under predetermined conditions causing the activation state to be eliminated, characterised in that the transaction device, on reading the activation stater per se, is arranged to cause the activation state of the information storing means (4,5,6) to be eliminated.

2. A transaction system as claimed in claim 1, wherein said information storing means (4, 5, 6) include a chip circuit (4) having signal processing means and memory means (6) for storing the activation state.

3. A method of validating a transaction to be performed, controlled by an information carrier (1), in particular an IC-card, read by a transaction device (28), the information carrier first being brought into an activation state by the holder of the information carrier (1) and thereafter being read by the transaction device (28), to validate the transaction to be performed the activation state of the information carrier (1) being eliminated in response to predetermined transaction conditions,
characterized by causing the activation state of the information carrier (1) to be eliminated in response to the transaction device reading the activation state per se.

4. A method as claimed in claim 3, wherein the reading of the activation state per se triggers an extinguishing procedure for extinguishing said activation state.

5. An information carrier (1), in particular an IC-card, to be used when perfoming a transaction, the information carrier (1) comprising information storing means including a chip circuit (4) having signal processing means and memory means, for storing an activation state, means being provided for eliminating said activation state in connection with a transaction, characterized in that said means for eliminating the activation state are arranged for such elimination in response to the reading of the activation state per se.
